# EUROPÄISCHE PATENTSCHRIFT

(11) **EP 3 205 463 B1**
(45) Veröffentlichungstag und Bekanntmachung des Hinweises auf die Patenterteilung: **18.11.2020**
(21) Anmeldenummer: 17000117.6
(22) Anmeldetag: 24.01.2017
(51) Int. Cl.: B26D 1/08, B27G 21/00, B27C 5/10, B23Q 5/04, B23Q 5/10, B23Q 11/00, B23Q 11/08

(54) **HOLZBEARBEITUNGS-WERKZEUGSPINDEL, KEHLMASCHINE MIT EINER SOLCHEN WERKZEUGSPINDEL SOWIE VERFAHREN UNTER VERWENDUNG EINER WERKZEUGSPINDEL**
WOOD TREATMENT TOOL SPINDLE, MOULDING MACHINE WITH SUCH A TOOL SPINDLE AND METHOD UTILIZING A TOOL SPINDLE
BROCHE PORTE-OUTIL D'USINAGE DU BOIS, MACHINE À MOULURER COMPRENANT UNE TELLE BROCHE PORTE-OUTIL ET PROCÉDÉ FAISANT APPEL À UNE BROCHE PORTE-OUTIL

(30) Priorität: 10.02.2016 DE 102016001745
(43) Veröffentlichungstag der Anmeldung: 16.08.2017
(73) Patentinhaber: Michael Weinig Ag, 97941 Tauberbischofsheim (DE)
(72) Erfinder: Dawidziak, Albrecht, 97950 Großrinderfeld (DE); Klein, Hubert, 97877 Wertheim-Nassig (DE)
(74) Vertreter: Kohl, Karl-Heinz

(56) Entgegenhaltungen:
- EP-A1- 1 579 951
- EP-A1- 1 762 331
- DE-A1-102004 050 270
- DE-A1-102010 003 338
- GB-A- 2 190 876
- JP-A- H 081 606
- US-A1- 2014 166 323
- US-B1- 6 505 972

## Beschreibung

Die Erfindung betrifft eine Holzbearbeitungs-Werkzeugspindel nach dem Oberbegriff des Anspruches 1, sowie ein Verfahren nach dem Oberbegriff des Anspruchs 8. Eine solche Holzbearbeitungs-Werkzeugspindel und ein solches Verfahren zur Überwachung der Temperatur sind aus dem Dokument US 6505972 B1 bekannt.

Bei Holzbearbeitungsmaschinen, insbesondere Kehlmaschinen, werden Werkzeugspindeln eingesetzt, mit denen zur Bearbeitung erforderliche Werkzeuge drehbar angetrieben werden. Die Werkzeugspindeln haben eine in einem Spindelgehäuse drehbar gelagerte Spindelwelle. Während der Holzbearbeitung sind die Drehlager, welche die Spindelwelle im Spindelgehäuse abstützen, teilweise hohen Kräften ausgesetzt. Dies kann dazu führen, dass die Drehlager beschädigt werden. Wird ein beschädigtes Drehlager nicht erkannt, führt dies zum Ausfall der entsprechenden Werkzeugspindel, was längere Stillstandszeiten der Maschine sowie hohe Reparaturkosten erfordert. Unter Umständen werden durch ein beschädigtes Drehlager auch Umgebungsteile innerhalb der Maschine beeinträchtigt, unter Umständen sogar beschädigt.

Der Erfindung liegt die Aufgabe zugrunde, die gattungsgemäße Werkzeugspindel, die Kehlmaschine und das Verfahren so auszubilden, dass frühzeitig ein drohender Ausfall der Werkzeugspindel in der Holzbearbeitungsmaschine erkannt werden kann.

Diese Aufgabe wird bei der gattungsgemäßen Werkzeugspindel erfindungsgemäß mit den kennzeichnenden Merkmalen des Anspruches 1, und beim Verfahren mit den Merkmalen des Anspruches 8 gelöst.

Die erfindungsgemäße Werkzeugspindel weist wenigstens einen Temperatursensor auf, mit dem die Temperatur des Drehlagers erfasst werden kann. Dadurch lässt sich zuverlässig feststellen, ob sich die Temperatur des Drehlagers im Betrieb der Werkzeugspindel einem kritischen Wert nähert. Der Temperatursensor erzeugt Signale, welche einer Auswerteeinheit zugeführt werden, welche die Temperatursignale entsprechend auswertet und in Abhängigkeit dieser Auswertung Ausgangssignale erzeugt. Der Benutzer erhält aufgrund der Temperaturüberwachung rechtzeitig vor einem Ausfall der Werkzeugspindel einen Hinweis darauf, dass ein weiterer Einsatz der Werkzeugspindel unter Umständen kritisch ist.

Der Temperatursensor kann im Spindelgehäuse benachbart zum Drehlager angeordnet sein. Es ist dadurch möglich, den Temperatursensor sehr nahe an das zu überwachende Drehlager heranzuführen. Hierbei kann der Abstand zwischen dem Temperatursensor und dem zu überwachenden Drehlager sehr gering sein, so dass die Temperatur des Drehlagers einwandfrei erfasst werden kann.

Erfidungsgemäß ist das Spindelgehäuse mit wenigstens einer axialen Bohrung versehen, die in eine Stirnseite des Spindelgehäuses mündet und zur Aufnahme des Temperatursensors dient. Der Temperatursensor kann von der Stirnseite des Spindelgehäuses aus sehr einfach so weit in die axiale Bohrung geschoben werden, bis sich ein Sensorkopf bzw. Temperaturfühler des Sensors benachbart zum Drehlager befindet. Der axiale Verlauf der Bohrung im Spindelgehäuse hat den Vorteil, dass Verstellbewegungen der Spindelachse, insbesondere des Spindelgehäuses, in Achsrichtung sowie auch quer dazu nicht beeinträchtigt werden, wenn die Sensorsignale über Leitungen weitergeleitet werden. Innerhalb der Bohrung ist der Sensor geschützt untergebracht und stört beim Verstellen der Werkzeugspindel nicht.

Hat die Werkzeugspindel mehrere Drehlager, beispielsweise zwei Drehlager, dann ist in vorteilhafter Weise für jedes Drehlager jeweils wenigstens ein Temperatursensor vorgesehen. Ist aber beispielsweise bekannt, dass nur das eine von mehreren Drehlagern Temperaturprobleme hat, dann reicht es aus, nur dieses eine Drehlager mittels wenigstens eines Temperatursensors zu überwachen.

Die Signale des Temperatursensors können entweder über wenigstens eine Sensorleitung oder aber drahtlos übertragen werden. Die drahtlose Übertragung der Sensorsignale hat den Vorteil, dass die Verlegung von Sensorleitungen in der Werkzeugspindel und ggf. die Weiterleitung an die Auswerteeinheit innerhalb der Holzbearbeitungsmaschine entfallen.

Die Signale des Temperatursensors werden vorteilhaft an eine Steuerung der Kehlmaschine übertragen. Diese Steuerung der Kehlmaschine bildet die Auswerteeinheit, welche die vom Temperatursensor gesendeten Signale auswertet.

Bei der erfindungsgemäßen Kehlmaschine ist wenigstens eine der Werkzeugspindeln in der erfindungsgemäßen Weise ausgebildet. Vorteilhaft werden alle Werkzeugspindeln der Kehlmaschine mit wenigstens dem einen Temperatursensor ausgerüstet, mit dem die Temperatur des Drehlagers dieser Werkzeugspindeln erfasst werden kann. Der Benutzer der Kehlmaschine erhält somit zuverlässig einen Zustandsbericht über alle Werkzeugspindeln der Kehlmaschine, so dass er frühzeitig darauf hingewiesen wird, wenn eine oder mehrere der Werkzeugspindeln auszufallen drohen.

Da die Temperatur des Drehlagers durch die Umgebungstemperatur der Werkzeugspindel beeinflusst werden kann, hat die erfindungsgemäße Kehlmaschine vorteilhaft wenigstens einen weiteren Sensor, der die Innentemperatur der Kehlmaschine, d. h. die Umgebungstemperatur der Werkzeugspindel in der Kehlmaschine, erfasst.

Bei einer bevorzugten Ausführungsform werden die Signale dieses weiteren Temperatursensors zur Kompensation des Temperaturgrenzwertes des Drehlagers herangezogen. Steigt beispielsweise die Umgebungstemperatur in der Kehlmaschine an, erwärmt sich auch das Drehlager, ohne dass dies auf eine übermäßige Beanspruchung des Drehlagers zurückzuführen ist. Dementsprechend wird der Temperaturgrenzwert unter Berücksichtigung der gemessenen Umgebungstemperatur entsprechend angehoben, wodurch der Einfluss der Umgebungstemperatur auf die Temperatur des Drehlagers kompensiert wird. Die Kompensation kann auch direkt an den Temperatursignalen der einzelnen Sensoren vorgenommen werden.

Beim erfindungsgemäßen Verfahren wird die Temperatur des Drehlagers mit dem wenigstens einen Temperatursensor ständig erfasst und der Auswerteeinheit zugeführt. Sie vergleicht die zugeführten Sensorsignale mit dem Temperaturgrenzwert. Wird er erreicht, erzeugt die Auswerteeinheit ein entsprechendes Signal.

Dieses von der Auswerteeinheit erzeugte Signal kann ein Warnsignal sein, das den Benutzer darauf hinweist, dass die erfasste Werkzeugspindel einen kritischen Bereich erreicht hat. Das Warnsignal kann ein akustisches und/oder optisches Signal oder beispielsweise eine Warnmeldung auf einem Bildschirm und dgl. sein.

Das von der Auswerteeinheit erzeugte Signal kann auch ein Abschaltsignal sein, über welches Maschinenfunktionen, wie Spindel, Vorschub, abgeschaltet werden. Dadurch werden zuverlässig eine Überbeanspruchung und damit eine Beschädigung der Werkzeugspindel vermieden. Vorteilhaft werden auf Basis der ausgewerteten Temperatursignale alle Spindeln und der Vorschub der Kehlmaschine automatisch abgeschaltet.

Vorteilhaft ist es, wenn zwei unterschiedlich hohe Temperaturgrenzwerte durch die Auswerteeinheit überwacht werden. Wird erstmals der tiefere Temperaturgrenzwert erreicht, dann kann die Auswerteeinheit vorteilhaft ein Warnsignal erzeugen. Sollten keine Maßnahmen seitens des Benutzers eingeleitet werden, dann erzeugt die Auswerteeinheit bei Erreichen des höheren Temperaturgrenzwertes ein weiteres Signal, das in diesem Falle vorteilhaft ein Abschaltsignal ist, mit dem die überwachte Werkzeugspindel bzw. weitere Maschinenfunktionen abgeschaltet werden.

Vorteilhaft wird bei Durchführung des Verfahrens nicht nur die Temperatur des Drehlagers, sondern auch die Umgebungstemperatur der überwachten Werkzeugspindel durch wenigstens einen weiteren Temperatursensor erfasst. Diese Umgebungstemperatur wird dann zur Kompensation des Temperaturgrenzwertes des Drehlagers und/oder des Temperaturwertes herangezogen.

Vorteilhaft werden die Temperatursignale des Temperatursensors und/oder des weiteren Temperatursensors in wenigstens einem Speicher gespeichert. Dieser Speicher kann ein der Holzbearbeitungsmaschine zugeordneter gesonderter Speicher sein. Die Signale können aber auch auf einem Netzwerkserver oder beispielsweise in einem Cloud-Speicher abgelegt werden. Die Speicherung der Signale hat den Vorteil, dass ein Servicedienst oder auch der Benutzer eine Historie über den Temperaturverlauf des Drehlagers jederzeit einsehen kann.

Besonders vorteilhaft ist es, wenn die Daten so abgelegt werden, dass sie mit einer Smart-Device abgerufen werden können.

Bei einer bevorzugten Ausführungsform wird bei Erreichen des Temperatur-grenzwertes ein Signal an einen Servicedienst gesendet, der dann entsprechende Maßnahmen ergreifen kann, um beispielsweise die Ursachen des Temperaturanstieges des Drehlagers zu überprüfen oder die vorbeugende Instandhaltung einzuplanen und in die Wege zu leiten.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine erfindungsgemäße Kehlmaschine mit erfindungsgemäßen Spindeln,
- Fig. 2: in perspektivischer Darstellung eine erfindungsgemäße Spindel,
- Fig. 3 und 4: jeweils Axialschnitte durch die erfindungsgemäße Spindel gemäß Fig. 2,
- Fig. 5: in einem Radialschnitt den Befestigungsbereich zweier Temperatursensoren an der erfindungsgemäßen Spindel.

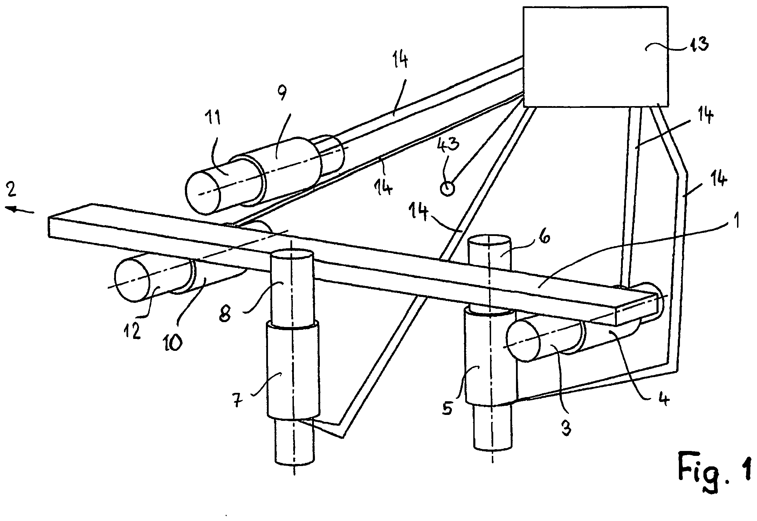

Fig. 1 zeigt in schematischer Darstellung eine Kehlmaschine, mit welcher im Querschnitt rechteckige Werkstücke 1 aus Holz, Kunststoff und dergleichen an allen vier Seiten im Durchlaufverfahren bearbeitet werden können. In Fig. 1 sind nur die Spindeln und die darauf sitzenden, schematisch dargestellten Werkzeuge angegeben, mit denen die Werkstückbearbeitung erfolgt. Die Transportelemente, Auflagen für die Werkstücke und dergleichen sind der Übersichtlichkeit wegen nicht dargestellt. Die Werkstücke 1 werden in Pfeilrichtung 2 durch die Kehlmaschine transportiert. Zunächst wird die Unterseite der Werkstücke 1 mit einem Werkzeug 3 bearbeitet, das auf einer horizontalen Spindel 4 sitzt. Mit dem Werkzeug 3 wird das Werkstück 1 beispielsweise gerade gehobelt. In Transportrichtung 2 hinter der unteren horizontalen Spindel 4 befindet sich eine vertikale rechte Spindel 5, die ein Werkzeug 6 trägt, mit dem die in Durchlaufrichtung 2 rechte Längsseite des Werkstückes 1 beim Durchlauf des Werkstückes bearbeitet wird. In Transportrichtung 2 hinter der rechten vertikalen Spindel befindet sich eine linke vertikale Spindel 7, auf der ein Werkzeug 8 sitzt, mit welchem die in Transportrichtung 2 linke Längsseite des Werkstückes 1 bearbeitet wird. In Durchlaufrichtung 2 hinter der linken vertikalen Spindel sind eine obere sowie eine untere horizontale Spindel 9, 10 vorgesehen, deren Werkzeuge 11, 12 die Ober- und die Unterseite des Werkstückes 1 bearbeiten. Die Werkzeuge können jeweils Hobel- oder Profilierwerkzeuge sein, mit denen die jeweiligen Seiten entweder gerade gehobelt oder mit einem Profil versehen werden.

Bei allen Spindeln 4, 5, 7, 9, 10 werden die Lager durch Temperatursensoren überwacht, deren Signale einer Steuerung 13 zugeführt werden. Diese Signale können über Leitungen 14, aber auch drahtlos der Steuerung 13 der Kehlmaschine übermittelt werden.

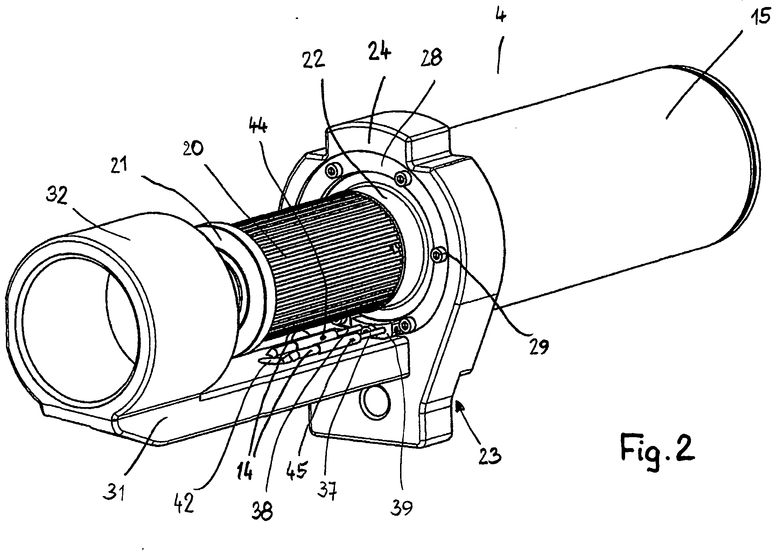

Anhand der Fig. 2 bis 5 wird die Spindel 4 näher beschrieben. Die anderen Spindeln 5, 7, 9, 10 der Kehlmaschine haben eine grundsätzlich gleiche Ausbildung.

Die Spindel 4 hat ein Spindelgehäuse 15, in dem eine Spindelwelle 16 drehbar gelagert ist. Das Spindelgehäuse 15 ist beispielhaft eine zylindrische Spindelhülse, welche die Spindelwelle 16 mit Abstand umgibt. An beiden Enden des Spindelgehäuses 15 befinden sich Drehlager 17, 18 zur Abstützung der Spindelwelle 16. Die Drehlager 17, 18 sind vorteilhaft Wälzlager, im Ausführungsbeispiel Kugellager. Vorteilhaft sind jeweils zwei Kugellager aneinanderschließend an beiden Enden des Spindelgehäuses 15 vorgesehen. Die Drehlager 17, 18 sind in geeigneter Weise im Spindelgehäuse 15 axial gesichert. Die Spindel 4 ist mit dem Spindelgehäuse 15 in einer Bohrung eines nicht dargestellten Spindelschiebers aufgenommen und kann in dieser Bohrung in bekannter Weise axial verstellt werden. Dies kann als Pinolenverstellung bezeichnet werden.

Die Spindelwelle 16 ist an ihrem einen Ende mit einer Aufnahme 19 versehen, die im Ausführungsbeispiel eine HSK-Aufnahme ist, die ein Werkzeug aufnimmt. Auf dem über das Spindelgehäuse 15 axial vorstehenden Ende sitzt eine Antriebsscheibe 20, die im Ausführungsbeispiel eine Zahnriemenscheibe ist, über die ein Endlosriemen eines Antriebes geführt ist, mit welchem die Spindelwelle 16 drehbar angetrieben wird. Die Antriebsscheibe 20 sitzt drehfest auf der Spindelwelle 16 und ist axial zwischen zwei auf der Spindelwelle 16 befestigten Ringen 21, 22 gesichert. Der Ring 21 ist als Mutter ausgebildet und dient zusammen mit der Antriebsscheibe 20 und dem Ring 22 auch zur Axialsicherung des Drehlagers 17.

An der Spindel 4 ist ein Halter 23 befestigt. Er hat einen Aufnahmering 24, der an einer Stirnseite mit einer Vertiefung 25 versehen ist, in die das Spindelgehäuse 15 mit einem Ende ragt. Die Vertiefung 25 wird axial von einem radial nach innen gerichteten Ringflansch 26 begrenzt, an dem das Spindelgehäuse 15 mit seinem stirnseitigen Rand anliegt.

Der Aufnahmering 25 weist an seiner anderen Stirnseite eine weitere Vertiefung 27 auf, die wesentlich flacher ist als die Vertiefung 25 und sich aufgrund einer spanenden Bearbeitung des gegossenen Halters 23 ergibt. Der auf diese Weise bearbeitete Boden 28 (Fig. 2) ist von Befestigungsschrauben 29 durchsetzt, die über den Umfang der Vertiefung 27 verteilt angeordnet und in Gewindebohrungen an der Stirnseite des Spindelgehäuses 15 geschraubt sind.

Der Ringflansch 26 sowie der benachbarte Bereich des Spindelgehäuses 15 haben in etwa den gleichen Innendurchmesser. Der Ring 22 hat einen radial nach außen gerichteten Ringflansch 30, der zur Innenseite des Ringflansches 26 sowie zur Innenseite des Spindelgehäuses 15 nur geringen Abstand hat und damit einen Dichtspalt bildet. Dadurch wird das Eindringen von Spänen oder Staub an die Drehlager 17 verhindert.

Vom Aufnahmering 24 steht ein Tragarm 31 ab, der am freien Ende mit einem Haltering 32 versehen ist, in welchem eine (nicht dargestellte) Löseeinheit für die in der Spindel 4 eingespannten Werkzeuge 3 gehalten wird. Diese sind in der HSK-Aufnahme der Spindel 4 durch bekannte, nicht dargestellte Spannmittel gespannt. Der Halter 23 dient nicht nur zum Halten der Löseeinheit, sondern auch als Träger einer Mutter oder eines Gewindes für die Axialverstellung der Spindel.

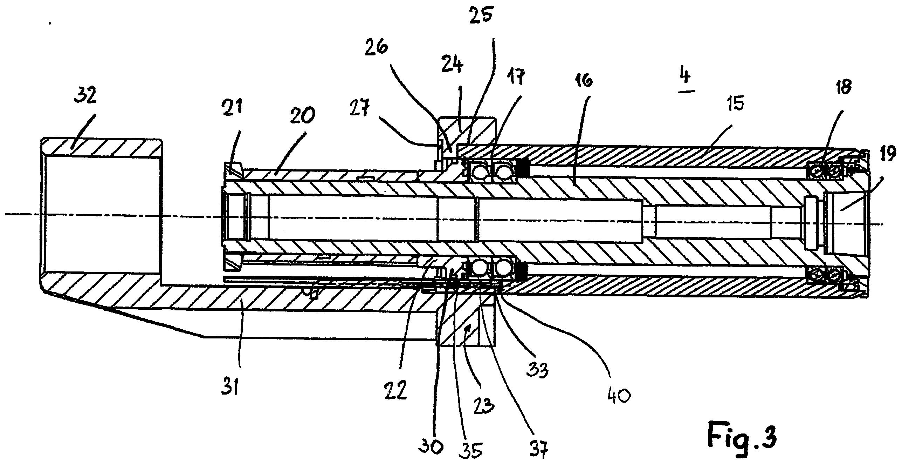

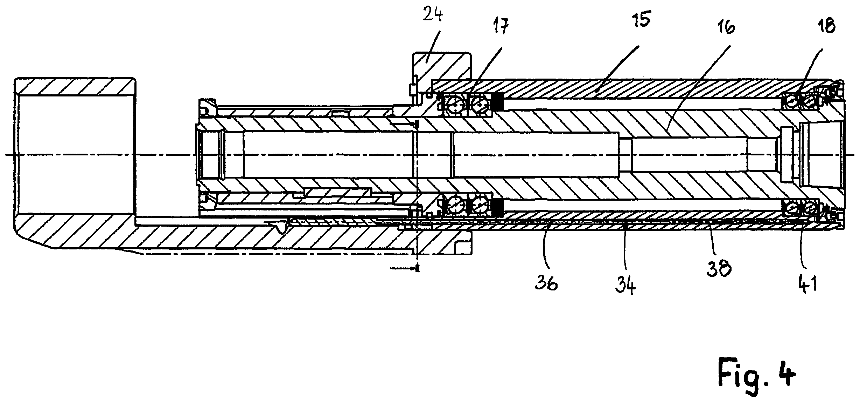

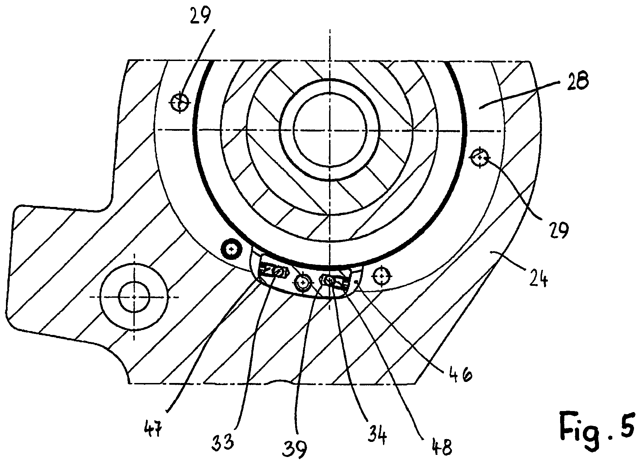

Die Spindel 4 ist mit Temperatursensoren 33, 34 versehen, mit denen die Temperatur der Drehlager 17, 18 erfasst werden kann. Im Ausführungsbeispiel sind die Temperatursensoren 33, 34 durch axiale Bohrungen 35, 36 (Fig. 3 und 4) im Spindelgehäuse 15 bis zu den jeweiligen Lagern 17, 18 geführt. Die Sensoren haben einen Sensorkopf 40, 41, dem eigentlichen Temperaturfühler, der in dem vorderen Ende eines dünnen Rohres 37, 38 eingebracht ist, in welchem Sensorleitungen (Sensordrähte) 14 nach außen geführt sind. An das Rohr 37, 38 schließt eine Hülse 44, 45 an (Fig. 2), in vorteilhafter Weise eine Quetschhülse, aus deren vom Rohr 37, 38 abgewandten Ende die ummantelten flexiblen Sensorleitungen 14austreten. Die axialen Bohrungen 35, 36 erstrecken sich von der im Aufnahmering 24 liegenden Stirnseite des Spindelgehäuses 15 aus. Die Temperatursensoren 33, 34 ragen mit ihrem Rohr 37, 38 durch einen Befestigungsblock 39 aus dem Spindelgehäuse 15. Der Befestigungsblock 39 ist am Spindelgehäuse 15 lösbar befestigt. Der Ringflansch 26 des Aufnahmeringes 24 ist im Bereich des Befestigungsblockes 39 durch eine Aussparung 46 unterbrochen (Fig. 5). Die Ränder der Aussparung 46 haben jeweils Abstand vom Befestigungsblock 39. Im Befestigungsblock 39 werden die Rohre 37, 38 und damit die Temperatursensoren 33, 34 gesichert, so dass sie in den Bohrungen 35, 36 nicht verschoben werden können. Dadurch wird sichergestellt, dass der Sensorkopf 40, 41 sich stets in Höhe der zu überwachenden Drehlager 17, 18 befindet. Die Sicherung kann wie im Ausführungsbeispiel über seitlich in den Befestigungsblock 39 geschraubte Gewindestifte 47, 48 erfolgen. Dadurch lassen sich Längentoleranzen oder auch unterschiedlich tiefe Bohrungen 35, 36 ausgleichen. Es ist auch möglich, die Sensoren 33, 34 mit einem Gewinde zu versehen und in den Befestigungsblock 39 einzuschrauben.

Die Sensorleitungen 14 werden in geeigneter Weise zur Maschinensteuerung 13 geführt, wie es beispielhaft anhand der Fig. 1 mit den Leitungen 14 beschrieben und erläutert worden ist. Im dargestellten Ausführungsbeispiel werden die Sensorleitungen14 durch Öffnungen 42 im Tragarm 31 weitergeführt.

Mit den Temperatursensoren 33, 34 kann die Temperatur der Drehlager 17, 18 permanent überwacht werden. Die Signale der Temperatursensoren 33, 34 werden einer Auswerteeinheit zugeführt. Im einfachsten Fall wird bei Überschreiten eines vorgegebenen Temperatur-Grenzwertes von der Auswerteeinheit ein Signal erzeugt. Es kann dazu verwendet werden, um eine Warnmeldung an den Benutzer der Spindel bzw. der Kehlmaschine zu senden. Auch ist es möglich, dieses Signal dazu heranzuziehen, die entsprechende Maschinenfunktion, beispielsweise den Drehantrieb der Spindel 4 oder den Vorschub, d.h. den Werkstücktransport durch die Kehlmaschine, abzuschalten. Dieser Grenzwert für die Temperatur der Drehlager 17, 18 kann so niedrig eingestellt sein, dass das entsprechend ausgewertete Signal der Temperatursensoren 33, 34 frühzeitig ausgesendet wird, wenn die Drehlager 17, 18 noch nicht beschädigt sind. Die Temperatursensoren 33, 34 dienen in diesem Falle der vorbeugenden Instandhaltung sowie der frühzeitigen Erkennung von Lagerschäden. Dadurch wird zuverlässig vermieden, dass aufgrund nicht rechtzeitig erkannter Lagerschäden Folgeschäden an der Spindel bzw. an der Kehlmaschine auftreten.

Vorteilhaft ist es, wenn nicht nur ein Grenzwert, sondern beispielsweise auch zwei oder mehr Grenzwerte vorgegeben werden. So kann bei Überschreiten der ersten Grenztemperatur eine erste Warnung erzeugt werden, die den Benutzer darauf hinweist, dass bei weiterem Betrieb der Spindel eventuell größere Lagerschäden auftreten können. Bei Erreichen einer zweiten höheren Grenztemperatur kann die Steuerung 13 so eingerichtet sein, dass sie dann die Spindeln 4, 5, 7, 9, 10 sowie den Vorschub abschaltet, um Folgeschäden zu verhindern.

Durch Einsatz der Temperatursensoren 33, 34 ist somit eine vorausschauende Wartung und dadurch eine Reduzierung ungeplanter Stillstandszeiten möglich, die dann auftreten würden, wenn eine Temperaturüberwachung der Drehlager nicht vorgenommen wird. Da Schäden an den Drehlagern 17, 18 durch Einsatz der Temperatursensoren 33, 34 frühzeitig erkannt werden, können Folgeschäden an der Spindel 4 sowie auch an Umgebungsteilen innerhalb der Maschine vermieden werden. Auch werden dadurch Reparaturkosten reduziert.

Im dargestellten und beschriebenen Ausführungsbeispiel werden die Sensorsignale über die Sensorleitungen 14 an die Maschinensteuerung 13 übertragen. Es können aber auch Temperatursensoren eingesetzt werden, die ihre Signale kabellos übertragen. In diesem Falle können die Sensoren insbesondere direkt an bzw. in die Drehlager 17, 18 eingebaut werden, so dass die Temperatur der Drehlager 17, 18 noch wesentlich genauer erfasst werden kann. Die Temperatursensoren 33, 34 können ihre Signale beispielsweise über Funk übertragen, beispielsweise an Empfangseinheiten, die im Bereich der einzelnen Spindeln angeordnet sind. Die Empfangseinheiten für die drahtlose Übermittlung der Sensorsignale sind wiederum über Leitungen 14 mit der Steuerung 13 verbunden. Solche Sensoren erleichtern den Einbau in die Spindel 4, weil keine Vorkehrungen für die Durchführung von Sensorleitungen mehr erforderlich sind.

Auch wenn die Temperatursensoren 33, 34 ihre Signale über die Sensorleitungen 14 übertragen, können die Sensoren direkt im Drehlager 17, 18 angeordnet werden.

Die Zuverlässigkeit der Lagerdiagnose bzw. des Erkennens eines Lagerschadens kann in vorteilhafter Weise dadurch verbessert werden, dass auch die Umgebungstemperatur der Spindel 4 gemessen wird. Hierfür ist, wie in Fig. 1 schematisch angegeben ist, wenigstens ein weiterer Temperatursensor 43 vorgesehen, der an die Maschinensteuerung bzw. Auswerteeinheit 13 angeschlossen ist. Auch dieser Sensor 43 kann seine Signale über Sensorleitungen oder drahtlos, beispielsweise über Funk, übertragen. Mit der Erfassung der Umgebungstemperatur der Spindel 4 kann der Einfluss der Umgebungstemperatur auf die Temperatur der Drehlager 17, 18 in der Auswertung berücksichtigt und kompensiert werden.

Da die durch den wenigstens einen weiteren Temperatursensor 33 erfasste Innenraumtemperatur der Maschine Einfluss auf die Temperatur der Drehlager 17, 18 hat, kann die Steuerung 13 so ausgeführt sein, dass die Grenzwerte der Lagertemperaturen bzw. die erfassten Lagertemperaturwerte selbst automatisch an die gemessene Innenraumtemperatur angepasst werden. Steigt beispielsweise die vom Temperatursensor 43 erfasste Innenraumtemperatur der Maschine an, steigt auch die Temperatur der Drehlager 17, 18. Dieser Temperaturanstieg hat dann allerdings nichts mit einer entsprechenden Belastung der Drehlager zu tun. Dementsprechend ist die Steuerung bzw. die Auswertung der Temperatursensoren so vorgesehen, dass die entsprechenden Grenzwerte so erhöht werden, dass der Einfluss der Innentemperatur der Maschine auf die Temperatur der Drehlager 17, 18 kompensiert wird.

Des Weiteren kann die Steuerung 13 bzw. Auswerteeinheit so ausgebildet sein, dass sie nicht die Temperatur-Grenzwerte der Drehlager 17, 18, sondern die Spindeltemperaturwerte in Abhängigkeit von der Innentemperatur der Maschine automatisch kompensiert bzw. anpasst, indem beispielsweise ein innentemperaturabhängiger Korrekturwert von dem gemessenen Temperaturwert abgezogen bzw. zu diesem addiert wird. Auch eine Kombination beider Verfahren ist möglich.

Die automatische Anpassung und Kompensation hat den Vorteil, dass der Benutzer der Maschine nicht selbst die Anpassung vornehmen muss.

Es ist aber durchaus möglich, die Steuerung 13 so zu gestalten, dass die Grenzwerte für die Lagertemperaturen manuell in Abhängigkeit von der gemessenen Innenraumtemperatur der Maschine angepasst werden.

Die Temperaturüberwachung der Drehlager 17, 18 kann so ausgebildet sein, dass die Temperaturwerte kontinuierlich gespeichert werden. Dadurch ist es möglich, die Historie des Temperaturverlaufes der einzelnen Temperatursensoren 33, 34 festzuhalten und beispielsweise die Häufigkeit der Überschreitung der Grenzwerte über einen bestimmten Zeitraum zu überprüfen. Diese gespeicherten Daten können beispielsweise in der Auswerteeinheit, der Maschinensteuerung oder durch Übertragung in eine Cloud abgelegt werden, so dass zugangsberechtigte Personen jederzeit die gespeicherten Messwerte abrufen und auswerten können. Dies ist insbesondere für den Service von Vorteil. Insbesondere die Speicherung in einer Cloud bietet die Möglichkeit der vorteilhaften Nutzung sogenannter Smart devices und Apps zur Analyse und Anzeige bestimmter Daten von maschinenunabhängigen Orten aus.

Da die Drehlager 17, 18 getrennt überwacht werden, kann ihr Zustand unabhängig voneinander genau überwacht werden.

Bei einer Aufzeichnung der Messdaten in einem Speicher können unterschiedliche Werte zusätzlich protokolliert werden. Es wird ein Zeitstempel festgehalten, der angibt, zu welchem Zeitpunkt die protokollierte Überwachung und Speicherung des gesamten Datensatzes stattgefunden hat. Es können nicht nur die Temperaturwerte der Drehlager 17, 18, sondern auch die Umgebungstemperatur der überwachten Spindeln, also die Innenraumtemperatur in der Maschine festgehalten werden. Darüber hinaus ist es möglich, Zustandsdaten der Maschine abzuspeichern, beispielsweise ob zum Zeitpunkt der Protokollierung die überwachten Spindeln ein- oder ausgeschaltet sind, ob der Vorschub ein- und ausgeschaltet ist, ob zu bearbeitende Werkstücke 1 in der Maschine vorhanden sind, welches Profil an den Werkstücken erzeugt werden soll und dergleichen. Aus der Historie dieser abgespeicherten Werte lässt sich beispielsweise auch erkennen, wann und wie lange die Spindeln bzw. der Vorschub ein- bzw. ausgeschaltet waren.

Die Signale der Temperatursensoren 33, 34 werden wie beschrieben einer bzw. mehrerer Auswerteeinheiten zugeführt. Diese können Bestandteil der Maschinensteuerung sein oder als von dieser unabhängige Einheit bzw. Einheiten vorgesehen sein. In letzterem Fall kann die Auswerteeinheit direkt die beschriebenen Maschinenfunktionen abschalten und der Maschinensteuerung ein Signal zur Anzeige einer Warn- oder Fehlermeldung senden.

Vorteilhaft ist, wenn die jeweiligen aktuellen Temperaturen direkt an dem Bildschirm der Maschinensteuerung aufrufbar und diejenigen Temperaturen, die die eingestellten Grenzwerte überschreiten, gekennzeichnet sind, beispielsweise farbig hinterlegt, farbig geschrieben, blinkend oder Ähnliches. Ebenso vorteilhaft ist es, wenn der Bediener über die Maschinensteuerung eine Meldung bekommt, aufgrund welcher Grenzwertüberschreitung an welchem Lager welcher Spindel die Maschine (Spindeln und Vorschub) abgeschaltet wurde.

## Patentansprüche

1. Holzbearbeitungs-Werkzeugspindel mit einem Spindelgehäuse (15), in dem eine Spindelwelle (16) mit wenigstens einem Drehlager (17, 18) gelagert ist, und mit wenigstens einem Temperatursensor (33, 34), der benachbart zum Drehlager (17, 18) im Spindelgehäuse (15) angeordnet ist, die Temperatur des Drehlagers (17, 18) erfasst und Signale mindestens einer Auswerteeinheit (13) zuführt, die in Abhängigkeit dieser Auswertung Ausgangssignale erzeugt, **dadurch gekennzeichnet, dass** das Spindelgehäuse (15) wenigstens eine axiale Bohrung (35, 36) aufweist, die in eine Stirnseite des Spindelgehäuses (15) mündet und den Temperatursensor (33, 34) aufnimmt.

2. Werkzeugspindel nach Anspruch 1,
**dadurch gekennzeichnet, dass** der Temperatursensor (33, 34) direkt am oder im Drehlager (17, 18) angeordnet ist.

3. Werkzeugspindel nach Anspruch 1 oder 2,
**dadurch gekennzeichnet, dass** die Werkzeugspindel (4) mehrere Drehlager (17, 18) aufweist, und dass für wenigstens eines der Drehlager, vorzugsweise für alle Drehlager, jeweils wenigstens ein Temperatursensor (33, 34) vorgesehen ist.

4. Werkzeugspindel nach einem der Ansprüche 1 bis 3,
**dadurch gekennzeichnet, dass** Signale des Temperatursensors (33, 34) über wenigstens eine Sensorleitung (14) oder drahtlos übertragen werden.

5. Werkzeugspindel nach einem der Ansprüche 1 bis 4,
**dadurch gekennzeichnet, dass** die Signale des Temperatursensors (33, 34) an eine Steuerung (13) einer Kehlmaschine als Auswerteeinheit übertragen werden.

6. Kehlmaschine mit Werkzeugspindeln (4) zur Bearbeitung von länglichen Werkstücken aus Holz, Kunststoff und dergleichen im Durchlaufverfahren, bei dem die Werkstücke an den Längsseiten bearbeitet werden, wobei wenigstens eine der Werkzeugspindeln (4) nach einem der Ansprüche 1 bis 5 ausgebildet ist.

7. Kehlmaschine nach Anspruch 6,
**dadurch gekennzeichnet, dass** in der Kehlmaschine wenigstens ein weiterer Temperatursensor (43) angeordnet ist, der die Innentemperatur der Kehlmaschine erfasst und/oder zur Kompensation des Grenzwertes der Drehlagertemperatur und/oder des Temperaturwertes der Spindel (4) herangezogen werden.

8. Verfahren zur Überwachung der Temperatur wenigstens eines Drehlagers einer Werkzeugspindel einer Holzbearbeitungsmaschine, nach einem der Ansprüche 1 bis 5 bzw. 6 oder 7, bei dem mit wenigstens einem Temperatursensor (33, 34) die Temperatur des Drehlagers (17, 18) permanent erfasst und wenigstens einer Auswerteeinheit (13) zugeführt wird, die die zugeführten Temperatursignale mit einem Temperaturgrenzwert vergleicht und ein Signal erzeugt, wenn die zugeführten Temperatursignale den Temperaturgrenzwert erreichen, **dadurch gekennzeichnet, dass** die Temperaturwerte so gespeichert werden, dass die Historie des Temperaturverlaufes festgehalten und ausgewertet werden kann.

9. Verfahren nach Anspruch 8,
**dadurch gekennzeichnet, dass** das von der Auswerteeinheit (13) erzeugte Signal ein Warnsignal und/oder ein Abschaltsignal ist, über welches Maschinenfunktionen, wie Spindeln, Vorschub, abgeschaltet werden.

10. Verfahren nach Anspruch 8 oder 9,
**dadurch gekennzeichnet, dass** die Auswerteeinheit (13) ein weiteres Signal erzeugt, wenn die zugeführten Temperatursignale einen zweiten höheren Temperaturgrenzwert erreichen.

11. Verfahren nach einem der Ansprüche 8 bis 10,
**dadurch gekennzeichnet, dass** die Umgebungstemperatur der überwachten Werkzeugspindel (4) von wenigstens einem weiteren Temperatursensor (43) erfasst und zur Kompensation des wenigstens einen Temperaturgrenzwertes und/oder des Temperaturwertes der Spindel (4) herangezogen wird.

12. Verfahren nach einem der Ansprüche 8 bis 11,
**dadurch gekennzeichnet, dass** die Temperatursignale des Temperatursensors (33, 34) und des weiteren Temperatursensors (43) in wenigstens einem Speicher gespeichert werden.

13. Verfahren nach Anspruch 12,
**dadurch gekennzeichnet, dass** die gespeicherten Daten über ein Smart-Device abrufbar sind.

14. Verfahren nach einem der Ansprüche 8 bis 13,
**dadurch gekennzeichnet, dass** bei Erreichen des Temperaturgrenzwertes ein Signal an einen Servicedienst gesendet wird.

## Claims

1. Wood treatment tool spindle with a spindle housing (15), in which a spindle shaft (16) with at least one pivot bearing (17, 18) is mounted, and with at least one temperature sensor (33, 34), which is arranged adjacent to the pivot bearing (17, 18) in the spindle housing (15), detects the temperature of the pivot bearing (17, 18) and transmits signals to at least one evaluation unit (13) which generates output signals depending on this evaluation,
**characterized in that** the spindle housing (15) comprises at least one axial bore hole (35, 36), which opens into an end face of the spindle housing (15) and receives the temperature sensor (33, 34).

2. Tool spindle according to Claim 1,
**characterized in that** the temperature sensor (33, 34) is arranged directly on or in the pivot bearing (17, 18) .

3. Tool spindle according to Claim 1 or 2,
**characterized in that** the tool spindle (4) comprises a plurality of pivot bearings (17, 18), and that at least one temperature sensor (33, 34) is provided for at least one preferably for all pivot bearings.

4. Tool spindle according to any one of the Claims 1 to 3,
**characterized in that** signals of the temperature sensor (33, 34) are transmitted via at least one sensor line (14) or transmitted wirelessly.

5. Tool spindle according to any one of the Claims 1 to 4,
**characterized in that** the signals of the temperature sensor (33, 34) are transmitted to a control system (13) of a moulding machine as an evaluation unit.

6. Moulding machine with tool spindles (4) for machining oblong workpieces made of wood, plastic and the like by a through-feed method where the workpieces are machined on the longitudinal sides, wherein at least one of the tool spindles (4) is designed according to any one of Claims 1 to 5.

7. Moulding machine according to Claim 6,
**characterized in that** at least one other temperature sensor (43) is arranged in the moulding machine that detects the internal temperature of the moulding machine and/or is used to compensate the limit value of the pivot-bearing temperature and/or the temperature value of the spindle (4).

8. Method for monitoring the temperature of at least one pivot bearing of a tool spindle of a woodworking machine according to any one of Claims 1 to 5 or 6 or 7, where the temperature of the pivot bearing (17, 18) is continuously detected using at least one temperature sensor (33, 34) and supplied to at least one evaluation unit (13), which compares the supplied temperature signals with a temperature limit value and generates a signal when the supplied temperature signals reach the temperature limit value,
**characterized in that** the temperature values are stored in such a way that the curve of the temperature history can be recorded and evaluated.

9. Method according to Claim 8,
**characterized in that** the signal generated by the evaluation unit (13) is a warning signal and/or a switch-off signal, via which machine functions, such as spindles, feeding, are switched off.

10. Method according to Claim 8 or 9,
**characterized in that** the evaluation unit (13) generates a further signal when the supplied temperature signals reach a second higher temperature limit value.

11. Method according to one of the Claims 8 to 10,
**characterized in that** the ambient temperature of the monitored tool spindle (4) is detected by at least one further temperature sensor (43) and used to compensate the at least one temperature limit value and/or the temperature value of the spindle (4).

12. Method according to one of the Claims 8 to 11,
**characterized in that** the temperature signals of the temperature sensor (33, 34) and the further temperature sensor (43) are stored in at least one storage.

13. Method according to claim 12,
**characterized in that** the stored data can be retrieved via a smart device.

14. Method according to one of the Claims 8 to 13,
**characterized in that** a signal is sent to a service system when the temperature limit is reached.

## Revendications

1. Broche porte-outil d'usinage du bois avec un boîtier de broche (15) dans lequel est logé un arbre de broche (16) avec au moins un palier rotatif (17, 18) et avec au moins un capteur de température (33, 34), qui est disposé au voisinage du palier rotatif (17, 18) dans le boîtier de broche (15), qui saisit la température du palier rotatif (17, 18) et alimente en signaux au moins une unité d'évaluation (13) qui produit des signaux de sortie en fonction de cette évaluation,
**caractérisée en ce que** le boîtier de broche (15) comporte au moins un alésage axiale (35, 36), qui débouche dans une face avant du boîtier de broche (15) et loge le capteur de température (33, 34).

2. Broche porte-outil selon la revendication 1,
**caractérisée en ce que** le capteur de température (33, 34) est directement disposé sur ou dans le palier rotatif (17, 18).

3. Broche porte-outil selon la revendication 1 ou 2,
**caractérisée en ce que** la broche porte-outil (4) comporte plusieurs paliers rotatifs (17, 18) et **en ce qu'**au moins un capteur de température (33, 34) est respectivement prévu pour au moins un des paliers rotatifs, de préférence pour tous les paliers rotatifs.

4. Broche porte-outil selon l'une quelconque des revendications 1 à 3,
**caractérisée en ce que** les signaux du capteur de température (33, 34) sont transmis par au moins une ligne de capteur (14) ou sans fil.

5. Broche porte-outil selon l'une quelconque des revendications 1 à 4,
**caractérisée en ce que** les signaux du capteur de température (33, 34) sont transmis à une commande (13) d'une machine à moulurer en tant qu'unité d'évaluation.

6. Machine à moulurer avec des broche porte-outil (4) pour l'usinage de pièces oblongues en bois, matière plastique et matériaux analogues en procédé continu pour lequel les pièces sont usinées sur les faces longitudinales, sachant qu'au moins une des broches porte-outil (4) est constituée selon l'une quelconque des revendications 1 à 5.

7. Machine à moulurer selon la revendication 6,
**caractérisée en ce que** dans la machine à moulurer est disposé au moins un autre capteur de température (43), qui saisit la température intérieure de la machine à moulurer et/ou auquel il est fait appel pour la compensation de la valeur limite de la température de palier rotatif et/ou de la valeur de température de la broche (4).

8. Procédé destiné à contrôler la température d'au moins un palier rotatif d'une broche porte-outil d'une machine d'usinage du bois selon l'une quelconque des revendications 1 à 5 ou 6 ou 7, pour lequel la température du palier rotatif (17, 18) est saisie en permanence avec au moins un capteur de température (33, 34) et est au moins acheminée à une unité d'évaluation (13), qui compare les signaux de température acheminés à une valeur limite de température et produit un signal, lorsque les signaux de température acheminés atteignent la valeur limite de température,
**caractérisée en ce que** les valeurs de température est mémorisées de telle manière que l'historique de la courbe de température peut être maintenu et évalué.

9. Procédé selon la revendication 8,
**caractérisée en ce que** le signal produit par l'unité d'évaluation (13) est un signal d'avertissement et/ou un signal d'arrêt par le biais duquel les fonctions de la machine, comme les opérations à la broche, l'avance, sont arrêtées.

10. Procédé selon la revendication 8 ou 9,
**caractérisée en ce que** l'unité d'évaluation (13) produit un autre signal, lorsque les signaux de température acheminés atteignent une deuxième valeur limite de température plus élevée.

11. Procédé selon l'une quelconque des revendications 8 à 10,
**caractérisée en ce que** la température ambiante de la broche porte-outil contrôlée (4) est saisie par au moins un autre capteur de température (43) et/ou auquel on fait appel pour la compensation d'au moins une valeur limite de température et/ou de la valeur de température de la broche (4).

12. Procédé selon l'une quelconque des revendications 8 à 11,
**caractérisée en ce que** les signaux de température du capteur de température (33, 34) et de l'autre capteur de température (43) sont mémorisés dans au moins une mémoire.

13. Procédé selon la revendication 12,
**caractérisée en ce que** les données mémorisées peuvent être interrogées par le biais d'un dispositif intelligent.

14. Procédé selon l'une quelconque des revendications 8 à 13,
**caractérisée en ce qu'**un signal est envoyé à un service de maintenance lorsque la valeur limite de température est atteinte.
